# FASCICULE DE BREVET EUROPEEN

(11) **EP 1 909 067 B1**
(45) Date de publication et mention de la délivrance du brevet: **07.09.2011**
(21) Numéro de dépôt: 07117650.7
(22) Date de dépôt: 01.10.2007
(51) Int. Cl.: G01C 21/16, G01C 19/00, F41G 7/36

(54) **Procédé de contrôle fonctionnel d'une centrale inertielle d'un mobile**
Verfahren zur Funktionssteuerung eines Trägheitsnavigationssystems für ein Mobilgerät
Method of operational control of an inertial centre of a mobile

(30) Priorité: 05.10.2006 FR 0654113
(43) Date de publication de la demande: 09.04.2008
(73) Titulaire: MBDA France, 75016 Paris (FR)
(72) Inventeur: Bourzier, Laurent, 18000, BOURGES (FR)
(74) Mandataire: David, Alain

(56) Documents cités:
- WILSON ET AL: "Unsteady RANS method for ship motions with application to roll for a surface combatant" COMPUTERS AND FLUIDS, PERGAMON PRESS, NEW YORK, NY, GB, vol. 35, no. 5, juin 2006 (2006-06), pages 501-524, XP005214840 ISSN: 0045-7930
- LI D ET AL: "Modeling, simulation, and control of a hydraulic Stewart platform" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA,IEEE, US, vol. 4, 20 avril 1997 (1997-04-20), pages 3360-3366, XP010235479 ISBN: 0-7803-3612-7
- VANZWIETEN ET AL: "Design of a prototype ocean current turbine-Part I: mathematical modeling and dynamics simulation" OCEAN ENGINEERING, ELMSFORD, NY, US, vol. 33, no. 11-12, août 2006 (2006-08), pages 1485-1521, XP005544815 ISSN: 0029-8018

## Description

### Domaine de l'invention

La présente invention se rapporte au domaine de contrôle fonctionnel d'une centrale inertielle d'un mobile embarquée sur un simulateur de mouvement.

### Art antérieur

D'une manière générale, un véhicule comme un avion, une fusée ou un autre type de mobile est équipé d'un système de navigation et pilotage comportant un calculateur de bord, une centrale inertielle et des moyens de pilotage pour fournir une position spatiale, un pilotage et un guidage du mobile.

Plus particulièrement, les moyens de pilotage (par exemple des gouvernes aérodynamiques) vont diriger le mobile vers une destination désignée ou selon une trajectoire déterminée grâce aux commandes reçues du calculateur de bord qui lui, reçoit des informations de nature inertielle de la centrale inertielle. En effet, à partir de ces informations inertielles, le calculateur de bord va réaliser une estimation de la position spatiale du mobile, et en fonction de celle-ci, il va donner des ordres ou commandes aux moyens de pilotage pour que le mobile poursuive sa route vers sa destination.

Cependant, si la centrale inertielle présente un défaut, le calculateur va réaliser ses estimations de la position spatiale du mobile à partir des informations inertielles inexactes. Le calculateur de bord va donc faire des erreurs, à chaque pas de calcul, et envoyer des commandes erronées aux moyens de pilotage. Par conséquent, la vraie trajectoire du mobile sera très différente de la trajectoire estimée par le calculateur de bord. Ainsi, si la centrale inertielle présente un défaut grave, les ordres envoyés par le calculateur embarqué seront tellement inappropriés que le mobile risque d'être déstabilisé.

Ainsi, afin de contrôler la fonctionnalité des centrales inertielles, on fait souvent appel à des simulateurs de mouvement. Plus particulièrement, on utilise des simulations hybrides mettant en oeuvre des sous-ensembles réels (par exemple, centrale inertielle, simulateur de mouvement, calculateur embarqué du mobile, certains éléments du mobile, etc.) et des modèles mathématiques pour d'autres sous-ensembles (par exemple, d'autres éléments du mobile, atmosphère, etc.).

Actuellement, dans les simulations hybrides mettant en oeuvre des centrales inertielles, deux cas peuvent être rencontrés concernant les informations provenant des accéléromètres de la centrale inertielle.

Selon le premier cas, les informations provenant des accéléromètres ne sont pas utilisées et sont remplacées par des informations provenant d'un modèle mathématique. Ceci est lié au fait que le simulateur de mouvement ne permet pas de reproduire les mouvements de translation. Ainsi, les informations issues des accéléromètres de la centrale inertielle sont incomplètes et ne comportent aucune information concernant le déplacement linéaire du mobile. En conséquence, le calculateur embarqué du mobile ne peut pas prendre en compte des informations issues des accéléromètres de la centrale inertielle pour déterminer la localisation, le pilotage et le guidage du mobile. Les anomalies potentiellement présentes sur ces informations ne sont en conséquence pas détectées par la simulation hybride. Autrement dit, la contribution des accéléromètres de la centrale inertielle réelle est absente, ce qui ne permet pas de détecter le moindre défaut potentiel sur les accéléromètres.

Selon le deuxième cas, les informations provenant des accéléromètres sont complétées par des informations représentatives des mouvements de translation, calculées par un modèle mathématique. Cependant, les informations provenant des accéléromètres de la centrale inertielle sont mesurées en un point fixe correspondant aux coordonnées du laboratoire de simulation. Ainsi, ces informations ne sont pas entièrement représentatives des informations que ces accéléromètres fourniraient, pour une même origine physique, au cours du déroulement de la trajectoire du mobile autour du globe terrestre. Par exemple, la pesanteur s'exerçant au point fixe du laboratoire est invariable, tandis que celle ressentie par les accéléromètres de la centrale inertielle embarquée dans le mobile se déplaçant autour du globe terrestre est variable en fonction de l'altitude et de la latitude. Ainsi, cette différence fausse la trajectographie du mobile obtenue en mettant en oeuvre la centrale inertielle au point fixe laboratoire, et rend difficile l'interprétation des résultats. De ce fait, cette méthode ne permet que de détecter un défaut grossier d'un ou des accéléromètres de la centrale inertielle.

Par ailleurs, les informations issues des gyromètres de la centrale inertielle ne sont pas entièrement représentatives de ce qu'elles sont au cours du déplacement réel du mobile autour du globe terrestre.

En effet, la décomposition de la rotation terrestre sur les axes des gyromètres est différente selon que la centrale inertielle est située à un point de coordonnées fixes (cas de la simulation hybride en laboratoire) ou qu'elle est embarquée dans un mobile se déplaçant autour du globe terrestre. L'incidence de cette représentativité incomplète est telle qu'elle complique l'analyse des résultats obtenus en simulation hybride.

De plus, le simulateur de mouvement doit présenter des performances de dynamique angulaire supérieure ou égale au besoin tout au long du déroulement de la trajectoire du mobile, ce qui peut nécessiter un simulateur de mouvement très sophistiqué et très coûteux.

Le contrôle fonctionnel d'une centrale inertielle embarqué sur un simulateur et fournissant des données inertielles de mesure représentative d'un mouvement comportant une modélisation et une simulation est décrit, par exemple, dans les documents :
WILSON ET AL : "Unsteady RANS method for ship motion with application to roll for a surface combatant" COMPUTERS AND FLUIDS, PERGAMON PRESS, NEW YORK, NY, GB, vol. 35 no 5, juin 2006, pages 501-524 ; et
LI D ET AL : "Modeling, simulation, and control of a hydraulic Stewart platform" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA, IEEE, US, vol 4, 20 avril 1997, pages 3360-3366.

### Objet et résumé de l'invention

La présente invention a pour objet un procédé de contrôle fonctionnel d'une centrale inertielle d'un mobile embarquée sur un simulateur de mouvement et fournissant en temps réel, des données inertielles de mesure représentatives d'un mouvement appliqué par ledit simulateur de mouvement, ledit procédé comportant :
- une modélisation théorique de la centrale inertielle embarquée sur le simulateur de mouvement, ladite modélisation théorique étant alimentée en temps réel par des données cinématiques réellement exécutées par le simulateur de mouvement et fournissant en temps réel des données inertielles théoriques représentatives desdites données inertielles de mesure censées être mesurées par la centrale inertielle embarquée sur le simulateur de mouvement,
- une modélisation de simulation comprenant une modélisation de la centrale inertielle dans un environnement réel de navigation, la modélisation de simulation étant alimentée en temps réel par des commandes de pilotage et fournissant, en temps réel des données inertielles de simulation représentatives des données de sorties de la centrale inertielle dans ledit environnement réel de navigation, ladite modélisation de simulation prenant en compte lesdites commandes de pilotage pour dérouler une trajectoire du mobile mettant en oeuvre la centrale inertielle,
- calcul desdites commandes de pilotage en fonction des données inertielles de mesure, des données inertielles de simulation et des données inertielles théoriques, et
- validation de la centrale inertielle, en comparant la trajectoire du mobile obtenue en mettant en oeuvre la centrale inertielle, avec une trajectoire de référence prédéterminée.

Le procédé selon l'invention permet d'élaborer une trajectographie du mobile très proche de la réalité non entachée du problème lié aux mesures effectuées à un point fixe et permettant ainsi de vérifier si la centrale inertielle possède des caractéristiques en accord avec le besoin impliquant alors un gain sur la qualité et le coût.

Avantageusement, les données inertielles de mesure comportent des informations accélérométriques issues des accéléromètres de ladite centrale inertielle, et en ce que les données inertielles théoriques comportent des informations accélérométriques théoriques.

Ainsi, on peut détecter les défauts éventuels provenant des accéléromètres de la centrale inertielle.

Avantageusement encore, les données inertielles de mesure comportent en outre des informations gyromètriques issues des gyromètres de ladite centrale inertielle, les données inertielles théoriques comportent des informations gyromètriques théoriques, et les données inertielles de simulation comportent des informations gyromètriques de simulation et des informations accélérométriques de simulation.

Ainsi, les informations accélérométriques et gyrométriques utilisées pour calculer les commandes de pilotage sont représentatives de celles fournies par la centrale inertielle embarquée par le mobile lors du déroulement de sa trajectoire autour du globe terrestre. Ceci est dû au fait que ces informations accélérométriques et gyrométriques comprennent des informations accélérométriques et gyrométriques provenant de la centrale inertielle et un complément calculé en temps réel par les modélisations théorique et de simulation.

Selon un mode particulier de la présente invention, lesdites commandes de pilotage sont calculées en fonction des données inertielles I définies par une somme entre les données inertielles de mesure R et les données inertielles de simulation T2 diminuée des données inertielles théoriques T1 (c'est-à-dire, I=T2 -T1+R).

Ainsi, on peut utiliser un simulateur de mouvement sous-dimensionné pour des transitoires à forte dynamique de la trajectoire. En effet, en vertu du principe I=T2 -T1+R, comme R et T1 dépendent de l'accomplissement effectué par le simulateur de mouvement, ils restent cohérents, même si ce dernier n'exécute pas correctement la commande. Ceci permet de dérouler une trajectoire précise du mobile avec un moindre coût.

La centrale inertielle peut être considérée comme valide lorsqu'un différentiel entre les données inertielles I et les données inertielles de simulation T2 est borné par une valeur de seuil prédéterminée (c'est-à-dire, [I- T2|≤ε ).

Ainsi, on peut s'assurer de la validité de la centrale inertielle de manière efficace et avec une très grande précision.

Le procédé selon l'invention, comporte en outre une modélisation d'avance de phase alimentée en temps réel par des commandes cinématiques d'entrées depuis la modélisation de simulation et fournissant des commandes cinématiques de sortie au simulateur de mouvement pour compenser un retard d'exécution inhérent audit simulateur de mouvement.

Ainsi, on peut compenser les retards d'exécution ce qui permet à toutes les grandeurs de rester en phase pour garantir la représentativité de mise en oeuvre de la centrale inertielle et des éventuels autres senseurs embarqués simultanément sur le simulateur de mouvements.

Avantageusement, lesdites commandes cinématiques d'entrées présentent un profil synchrone avec celui des données cinématiques, et en ce que les amplitudes desdites données cinématiques et desdites commandes cinématiques d'entrées C0 sont cohérentes.

Ainsi, les données cinématiques sont en concordances avec les mouvements réellement exécutés par le simulateur de mouvement permettant d'obtenir une stimulation de la centrale inertielle réelle, en phase avec la cinématique du mobile. Ceci garantit la représentativité de la mise en oeuvre de la centrale inertielle et assure le synchronisme vis-à-vis de la cinématique du mobile, pour d'autres senseurs pouvant être embarqués simultanément à la centrale inertielle, sur le simulateur de mouvements.

Avantageusement, le procédé selon l'invention, comporte en outre une modélisation de masquage en aval de la modélisation de simulation et en amont de la modélisation d'avance de phase de sorte que la modélisation de masquage est alimentée en temps réel par les commandes cinématiques d'entrées et fournissant des commandes cinématiques masquées à la modélisation d'avance de phase pour masquer au moins une partie des phases du mouvement.

Ainsi, on peut réaliser une trajectoire pour laquelle le débattement angulaire du mobile est supérieur à celui autorisé par le simulateur de mouvement.

Selon une particularité, au moins une partie des commandes cinématiques masquées dépend d'une loi interne à la modélisation de masquage et qui est indépendante des commandes cinématiques d'entrées.

Ceci permet de dérouler une trajectoire où le mobile peut réaliser plusieurs boucles ou circuits avec un simulateur de mouvement présentant un débattement angulaire limité.

L'invention vise également un système de contrôle fonctionnel d'une centrale inertielle d'un mobile embarquée sur un simulateur de mouvement et fournissant en temps réel, des données inertielles de mesure représentatives d'un mouvement appliqué par ledit simulateur de mouvement, ledit système comportant:
- un modèle théorique comprenant une modélisation de la centrale inertielle embarquée sur le simulateur de mouvement, le modèle théorique étant alimenté en temps réel par des données cinématiques réellement exécutées par le simulateur de mouvement et fournissant en temps réel des données inertielles théoriques représentatives desdites données inertielles de mesure censées être mesurées par la centrale inertielle embarquée sur le simulateur de mouvement,
- un modèle de simulation comprenant une modélisation de la centrale inertielle dans un environnement réel de navigation, le modèle de simulation étant alimenté en temps réel par des commandes de pilotage et fournissant, en temps réel des données inertielles de simulation représentatives des données de sorties de la centrale inertielle dans ledit environnement réel de navigation, ledit modèle de simulation prenant en compte lesdites commandes de pilotage pour dérouler une trajectoire du mobile mettant en oeuvre la centrale inertielle,
- des moyens de calcul pour calculer lesdites commandes de pilotage en fonction des données inertielles de mesure, des données inertielles de simulation et des données inertielles théoriques, et
- des moyens de validation pour s'assurer de la validité de la centrale inertielle, en comparant la trajectoire du mobile obtenue en mettant en oeuvre la centrale inertielle, avec une trajectoire de référence prédéterminée.

Les moyens de calcul sont destinés à déterminer lesdites commandes de pilotage en fonction des données inertielles I définies par une somme entre les données inertielles de mesure R et les données inertielles de simulation T2 diminuée des données inertielles théoriques T1.

Les moyens de validation sont destinés à considérer la centrale inertielle comme étant valide lorsqu'un différentiel entre les données inertielles et les données inertielles de simulation est borné par une valeur de seuil prédéterminée.

Le système comporte en outre un modèle d'avance de phase alimenté en temps réel par des commandes cinématiques d'entrées depuis le modèle de simulation et fournissant des commandes cinématiques de sortie au simulateur de mouvement pour compenser un retard d'exécution inhérent audit simulateur de mouvement.

Le système comporte en outre un modèle de masquage interposé entre ledit modèle de simulation et ledit modèle d'avance de phase de sorte que le modèle de masquage est alimenté en temps réel par les commandes cinématiques d'entrées et fournissant des commandes cinématiques masquées au modèle d'avance de phase pour masquer au moins une partie des phases du mouvement.

L'invention vise aussi un programme d'ordinateur comprenant des instructions de codes pour l'exécution des étapes du procédé de contrôle selon au moins l'une des caractéristiques ci-dessus, lorsqu'il est exécuté sur un ordinateur.

### Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :
- la figure 1 illustre de manière schématique un système de contrôle fonctionnel d'une centrale inertielle d'un mobile, selon l'invention;
- la figure 2 illustre de manière très schématique un exemple d'un système de contrôle fonctionnel selon la figure 1 ;
- les figures 3 à 5 illustrent différents modes de réalisation selon l'invention ; et
- la figure 6 illustre de manière schématique, un exemple d'un déroulement d'une trajectoire d'un mobile.

### Description détaillée de modes de réalisation

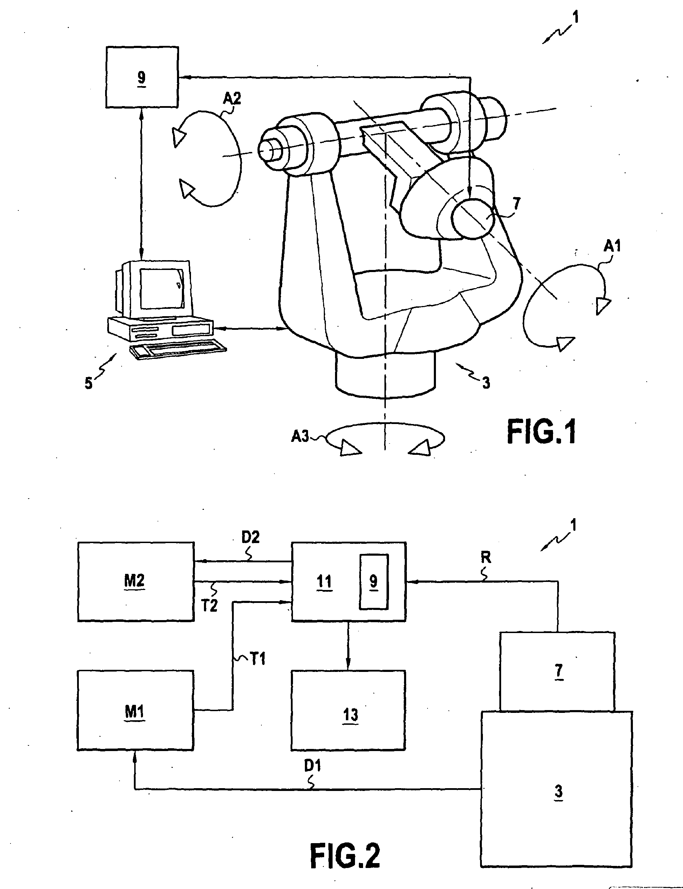

La figure 1, illustre de manière schématique un système de contrôle fonctionnel 1 d'une centrale inertielle d'un mobile. Ce système 1 comporte un simulateur de mouvement 3 relié à un dispositif informatique ou ordinateur 5 utilisé pour l'exécution des codes d'instructions d'un programme informatique conçu pour mettre en oeuvre le procédé selon l'invention.

Le simulateur de mouvement 3 peut réaliser des déplacements angulaires autour d'un axe de roulis A1, d'un axe de tangage A2 et d'un axe de lacet A3. Ainsi, en recevant une centrale inertielle 7, le simulateur de mouvement 3 peut appliquer des mouvements angulaires sur cette dernière selon les axes de roulis A1, de tangage A2 et de lacet A3. On notera que la centrale inertielle 7 peut être embarquée seule sur le simulateur de mouvement 3 ou lorsqu'elle est comprise dans le mobile (non représenté), ou lorsqu'elle est comprise dans au moins une partie du mobile.

Le système de contrôle fonctionnel 1 comporte en outre un calculateur 9 de bord du mobile qui est relié à la centrale inertielle 7 et à l'ordinateur 5.

On notera que les différentes liaisons entre l'ordinateur 5, le simulateur de mouvement 3, le calculateur 9 de bord, et la centrale inertielle 7 peuvent être réalisées via des câbles électriques ou optiques, par radio ou par d'autres moyens.

Conformément à l'invention, la figure 2 illustre de manière très schématique un exemple d'un système de contrôle fonctionnel 1 d'une centrale inertielle 7 d'un mobile (non représenté). On notera que la figure 2 est également une illustration des principales étapes du procédé de contrôle selon l'invention.

Ce procédé ou système est mis en oeuvre dans une simulation hybride réelle en boucle fermée utilisant des sous-ensembles réels (centrale inertielle 7, simulateur de mouvement 3, calculateur 9 embarqué du mobile, et éventuellement au moins une partie du mobile) et des modèles numériques d'autres sous-ensembles (par exemple, propulsion du mobile) et de l'environnement (atmosphère). Les sorties issues des sous-ensembles réels sont les entrées des modèles numériques, et les sorties des modèles numériques sont des entrées des sous-ensembles réels.

La centrale inertielle 7 (seule ou comprise dans au moins une partie du mobile) est embarquée sur le simulateur de mouvement 3 et fournit en temps réel, des données inertielles de mesure (c'est-à-dire des données inertielles réelles) R représentatives d'un mouvement appliqué par le simulateur de mouvement 3 et qui reproduit les mouvements angulaires du mobile en terme de débattement, de vitesse et d'accélération. Ces données inertielles de mesure R sont issues de gyromètres (ou gyroscopes) et d'accéléromètres (non représentés) de la centrale inertielle 7 et permettent en général, au calculateur 9 embarqué dans le mobile de réaliser sa localisation, son pilotage et son guidage.

Ce système de contrôle 1 comporte en outre un modèle (ou modélisation) théorique M1, un modèle (ou modélisation) de simulation M2, des moyens de calcul 11 et des moyens de validation 13. Le modèle théorique M1 et le modèle de simulation M2 peuvent être compris dans le dispositif informatique 5 de la figure 1. Par ailleurs, les moyens de calcul 11 comprennent le calculateur 9 de bord du mobile.

La simulation hybride se déroule en temps réel. Ainsi, les calculs et les échanges de données entre le calculateur 9 de bord du mobile et le modèle théorique M1, le modèle de simulation M2 et la centrale inertielle 7 sont effectués à la fréquence réelle cadençant les opérations réalisées par le calculateur 9 de bord du mobile, et avantageusement dans un délai inférieur à la période correspondant à cette fréquence, et ce pour chaque boucle de calcul.

Le modèle théorique M1 modélise la centrale inertielle 7 embarquée sur le simulateur de mouvement 3. Ce modèle théorique M1 est alimenté en temps réel depuis le simulateur de mouvement 3 par des données cinématiques D1 (positions, vitesses, et accélérations angulaires) réellement exécutées par ce simulateur de mouvement 3. En conséquence, le modèle théorique M1 fournit aux moyens de calcul 11, en temps réel, des données inertielles théoriques T1 représentatives des données inertielles de mesure R censées être mesurées par la centrale inertielle 7 embarquée sur le simulateur de mouvement 3.

Le modèle de simulation M2 comprend une modélisation de la centrale inertielle 7 dans un environnement réel de navigation. Le modèle de simulation M2 est alimenté en temps réel par des données ou commandes de pilotage D2 depuis les moyens de calcul 11. En retour, le modèle de simulation M2 fournit, en temps réel des données inertielles de simulation T2 représentatives des données de sorties de la centrale inertielle 7 dans un environnement réel de navigation.

Ainsi, le modèle de simulation M2 prend en compte les commandes de pilotage D2 pour dérouler une trajectoire du mobile mettant en oeuvre la centrale inertielle 7.

Les moyens de calcul 11 sont destinés à calculer les commandes de pilotage D2 en fonction des données inertielles de mesure R, des données inertielles de simulation T2 et des données inertielles théoriques T1.

Alors, les moyens de validation 13 peuvent s'assurer de la validité de la centrale inertielle 7, en comparant la trajectoire du mobile obtenue en mettant en oeuvre la centrale inertielle 7 réelle, avec une trajectoire de référence prédéterminée.

De manière connue, la trajectoire de référence prédéterminée peut être déroulée à partir d'une simulation entièrement numérique, par exemple par le modèle de simulation M2 tout seul comprenant une modélisation de tous les équipements réels y compris le calculateur de bord et la centrale inertielle.

La trajectoire de référence prédéterminée est obtenue de manière connue par un modèle de simulation entièrement numérique où tous les équipements réels y compris le calculateur et la centrale inertielle sont numérisés

Ainsi, les moyens de validation 13 comparent en temps différé la trajectoire de référence prédéterminée élaborée de manière entièrement numérique, avec la trajectoire du mobile, élaborée par le système de contrôle fonctionnel 1 mettant en oeuvre en temps réel, la centrale inertielle 7 réelle et le calculateur 9 embarqué réel. L'examen comparatif des résultats détermine si la centrale inertielle 7 est valide c'est-à-dire, qu'elle possède des caractéristiques en accord avec le besoin ou si la centrale inertielle n'est pas valide. En particulier, si les deux trajectoires sont superposées la centrale inertielle 7 peut être considérée comme parfaite.

Avantageusement, les données inertielles de mesure R comportent des informations accélérométriques issues des accéléromètres de la centrale inertielle 7 en plus des informations gyromètriques issues des gyromètres de la centrale inertielle 7. De même, les données inertielles théoriques T1 comportent des informations accélérométriques théoriques et des informations gyromètriques théoriques.

Les informations issues des accéléromètres de la centrale inertielle 7 réelle participent à la localisation, au pilotage et au guidage du mobile, effectué par le calculateur 9 de bord. Ainsi, les anomalies potentiellement présentes sur ces informations peuvent être détectées lors d'une comparaison entre les informations accélérométriques issues de la centrale inertielle 7 réelle et celles issues du modèle théorique M1.

En outre, les données inertielles de simulation T2 comportent des informations gyromètriques de simulation et des informations accélérométriques de simulation.

Ainsi, les informations accélérométriques et gyrométriques utilisées pour calculer les commandes de pilotage sont représentatives de celles fournies par la centrale inertielle embarquée par le mobile lors du déroulement de sa trajectoire autour du globe terrestre. Ceci est dû au fait que ces informations accélérométriques et gyrométriques comprennent en plus de celles provenant de la centrale inertielle située à un point de coordonnées fixes, un complément d'informations accélérométriques et gyrométriques calculé en temps réel par les modèles théorique M1 et de simulation M2.

En effet, les informations délivrées par la centrale inertielle 7 réelle sont des mesures effectuées au point fixe laboratoire, et ne sont pas complètement représentatives de celles qu'aurait délivré la centrale inertielle embarquée dans le mobile se déplaçant autour du globe terrestre.

Plus particulièrement, les données inertielles théoriques T1 calculées par la modélisation théorique M1 correspondent à l'expression théorique des mesures qu'est censée avoir réalisée la centrale inertielle 7 réelle au point fixe laboratoire, et ce de façon très représentative, puisque ce calcul utilise les données cinématiques appliquées à la centrale inertielle 7 réelle. Par ailleurs, les données inertielles de simulation T2 sont représentatives des mesures effectuées par la centrale inertielle 7 embarquée dans le mobile se déplaçant autour du globe terrestre.

En tenant compte des données inertielles de mesure R et des données inertielles théoriques T1 correspondantes, on soustrait toute erreur due aux mesures effectuées au point fixe. Par conséquent, en apportant la contribution des données inertielles de simulation T2 au couple de données inertielles de mesure R et théoriques T1, on obtient une trajectographie représentative de la réalité et non entachée du problème lié aux mesures effectuées au point fixe.

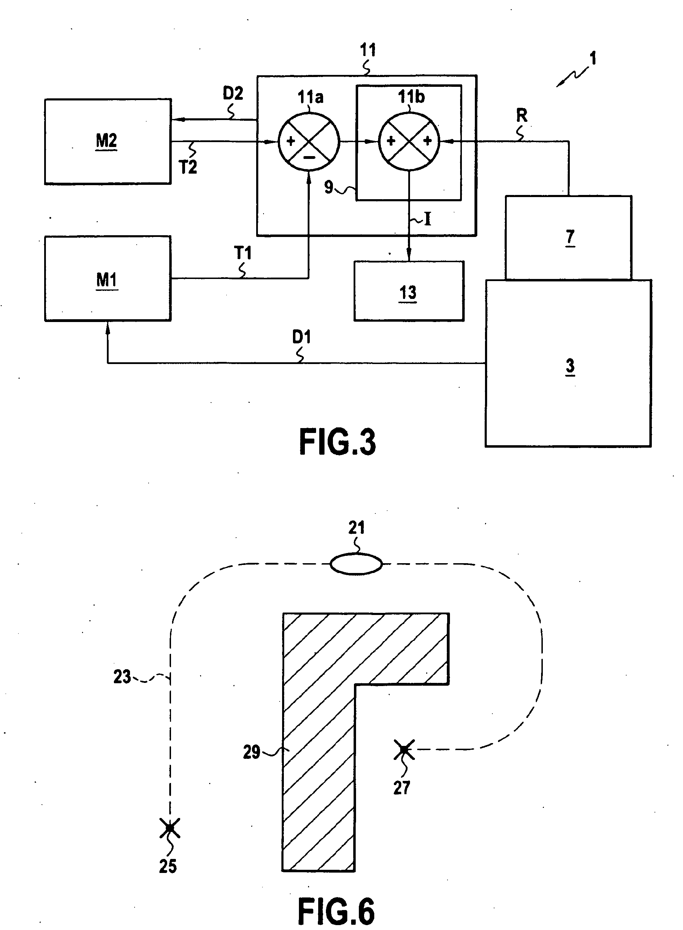

La figure 3 illustre de manière schématique un mode de réalisation d'un système de contrôle fonctionnel selon la figure 2. Selon ce mode de réalisation, les moyens de calcul 11 comportent des premier et second moyens d'opérations arithmétiques 11a et 11b réalisant des opérations arithmétiques entre les données inertielles de mesure R, les données inertielles de simulation T2 et les données inertielles théoriques T1 pour calculer des données inertielles I.

Ainsi, le premier moyen d'opérations arithmétiques 11a réalise la différence entre les données inertielles de simulation T2 et les données inertielles théoriques T1. Le résultat de cette différence (T2-T1) est ajouté aux données inertielles de mesure R par le second moyen d'opérations arithmétiques 11b pour exprimer les données inertielles I selon la formule I= T2+R-T1.

Les commandes de pilotage D2 sont alors calculées en fonction de ces données inertielles I définies par la somme entre les données inertielles de mesure R et les données inertielles de simulation T2 diminuée des données inertielles théoriques T1.

Ce mode de réalisation est basé sur l'utilisation, dans la simulation hybride du système de contrôle fonctionnel 1, d'un différentiel obtenu entre les données inertielles de mesure R fournies par la centrale inertielle 7 embarquée sur le simulateur de mouvement 3 et les données inertielles théoriques T1 fournies par le modèle théorique M1.

En vertu de la formule I=T2 -T1+R, comme R et T1 dépendent de l'accomplissement effectué par le simulateur de mouvement 3, ils restent cohérents, même si ce dernier n'exécute pas correctement la commande. Ceci permet de dérouler une trajectoire précise du mobile avec un simulateur de mouvement 3 de moindre coût.

Par ailleurs, lorsque les moyens de validation 13 comparent en temps différé la trajectoire de référence prédéterminée avec la trajectoire du mobile, élaborée par le système de contrôle fonctionnel 1, la validité de la centrale inertielle 7 est déterminée en fonction du différentiel entre R et T1.

Si R=T1, alors I=T2 ce qui correspond au fait que les deux trajectoires sont superposées et alors, la centrale inertielle 7 est parfaite. Dans ce cas, la trajectoire du mobile obtenue avec une telle centrale inertielle 7 est très proche des résultats obtenus avec le seul calculateur 9 de bord réel mis en oeuvre dans la simulation hybride.

Si R est voisin de T1, (par exemple, |R- T1|=ε, où ε est une valeur faible), alors, on perçoit une différence entre les deux trajectoires, mais on reste dans des bornes acceptables et la trajectoire peut être considérée conforme aux attentes. Dans ce cas, la centrale inertielle 7 possèdes des caractéristiques non nominales, mais reste à l'intérieur des bornes ou tolérances spécifiées dans son cahier de charge.

Si R est éloigné de T1, alors les deux trajectoires sont clairement différentes, le mobile n'atteint pas l'objectif (vraie trajectoire), alors que le calculateur 9 embarqué croit l'avoir atteint (trajectoire estimée). Dans ce cas, la centrale inertielle 7 possède des défauts importants.

Autrement dit, la centrale inertielle 7 peut être considérée comme valide lorsqu'un différentiel entre les données inertielles I et les données inertielles de simulation T2 est borné par une valeur de seuil ε prédéterminée ( |I- T2|≤ε ).

Par ailleurs, en calculant l'expression théorique T1 des mesures qu'est censée avoir réalisée la centrale inertielle 7 réelle au point fixe, en retranchant T1 à R, et en ajoutant la contribution des données inertielles de simulation T2 (représentatives des mesures effectuées par la centrale inertielle embarquée dans le mobile se déplaçant autour du globe terrestre), on obtient une trajectographie représentative de la réalité. On notera qu'en retranchant T1 à R, on enlève la contribution apportée par la centrale inertielle réelle à un η près (η =|R- T1|), où la valeur de η est d'autant plus grande que la centrale inertielle 7 réelle est imparfaite.

Selon cet exemple, on peut dérouler des trajectoires avec un modèle de simulation M2 prenant en compte les différentes tolérances de la centrale inertielle 7. On peut par exemple dérouler un nombre déterminé N de trajectoires en modulant les différentes variables dans leurs tolérances pour obtenir un chevelu de trajectoires. Si la trajectoire « vraie », c'est-à-dire celle qui est obtenue avec la centrale inertielle 7 réelle est incluse dans le chevelu obtenu grâce à la simulation numérique, alors, la centrale inertielle 7 peut être considérée valide. Dans le cas contraire, c'est qu'elle présente un défaut.

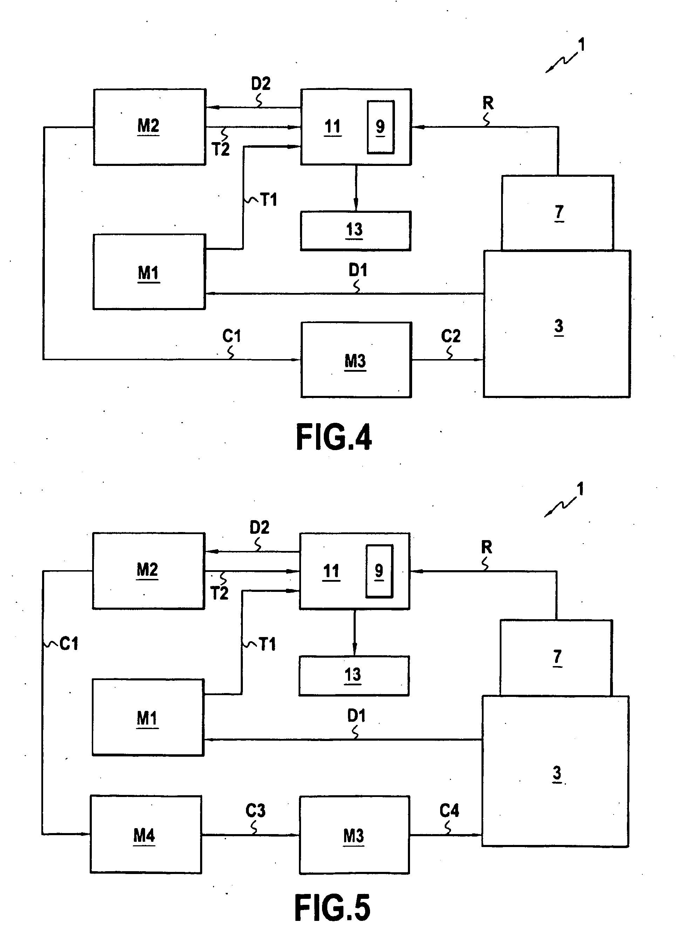

La figure 4 montre de manière schématique que le système de contrôle fonctionnel 1 comporte en outre un modèle (ou une modélisation) d'avance de phase M3. Ce modèle d'avance de phase M3 est alimenté en temps réel par des données ou commandes cinématiques d'entrées C1 depuis le modèle de simulation M2 et fournit des commandes cinématiques de sortie C2 au simulateur de mouvement 3 pour compenser un retard d'exécution inhérent au simulateur de mouvement 3.

En effet, d'une manière générale, le système de navigation et pilotage d'un mobile comprend une fonction appelée « pilote » qui est destinée à élaborer des ordres de braquage des moyens de pilotage compatibles des caractéristiques du mobile. Il s'agit d'une fonction automatique, jugeant en temps réel, grâce aux informations ou données inertielles et éventuellement d'autre nature (cas d'un senseur complémentaire autre qu'inertiel), de l'accomplissement de l'ordre commandé précédemment et adaptant au besoin le niveau de l'ordre de commande à venir. Si les moyens de pilotage ne réagissent pas assez vite, le pilote va s'en rendre compte et va donner des ordres plus forts pour compenser ce retard d'exécution.

Avantageusement, les commandes cinématiques d'entrées C1 présentent un profil synchrone avec celui des données cinématiques D1. De plus, les amplitudes des données cinématiques D1 et des commandes cinématiques d'entrées C1 sont cohérentes. La stimulation de la centrale inertielle est alors synchrone de la cinématique angulaire du mobile, garantissant la représentativité de la mise en oeuvre de la centrale inertielle et des éventuels autres senseurs embarqués simultanément sur le simulateur de mouvements.

La figure 5 montre de manière schématique que le système de contrôle fonctionnel selon la figure 4 comporte en outre un modèle (ou une modélisation) de masquage M4 qui selon cet exemple est en aval du modèle de simulation M2 et en amont du modèle d'avance de phase M3. Ainsi, le modèle de masquage M4 est alimenté en temps réel, depuis le modèle de simulation M2, par les commandes cinématiques d'entrées C1 et fournit des commandes cinématiques masquées C3 au modèle d'avance de phase M3 pour masquer au moins une partie des phases du mouvement du mobile.

Le modèle d'avance de phase M3 fournit alors au simulateur de mouvement 3, des commandes cinématiques de sortie C4 qui tiennent compte des commandes cinématiques masquées C3 pour réaliser une trajectoire pour laquelle le débattement angulaire et/ou la dynamique du mobile est supérieur à celui autorisé par le simulateur de mouvement 3.

Ainsi, un déplacement angulaire du simulateur de mouvement 3 ou un arrêt de ce déplacement, piloté volontairement à partir du modèle de masquage M4, est pris en compte par les données inertielles de mesure R et les données inertielles théoriques T1 mais n'affecte pas les commandes de pilotage D2.

En effet, selon l'exemple de la figure 3 et en vertu de la formule I=T2 T1+R, les données inertielles I ne sont pas affectées par tout déplacement angulaire ou arrêt du simulateur de mouvement 3 piloté par le modèle de masquage M4.

Par ailleurs, une surveillance implémentée dans le modèle de masquage M4 permet de limiter la commande de débattement angulaire avant d'atteindre les butées matérielles ou logicielles du simulateur de mouvement 3.

On notera que les modèles théorique M1, de simulation M2, d'avance de phase M3, et/ou de masquage M4 peuvent être compris dans le dispositif informatique 5 de la figure 1.

La figure 6 montre de manière schématique, un exemple d'un déroulement d'une trajectoire autour d'un obstacle.

A titre d'exemple, en utilisant un simulateur de mouvement 3 sous-dimensionné ayant une capacité de déplacement angulaire autour de l'axe de lacet de +/- 100 degrés, ce qui correspond à une excursion angulaire de 200 degrés, on peut dérouler une trajectoire présentant une excursion angulaire de 270 degrés. Ainsi, selon cet exemple, le mobile 21 peut parcourir une trajectoire 23 depuis un point de départ 25 jusqu'à un point d'arrivée 27 en contournant un obstacle 29 selon une excursion angulaire de 270 degrés.

En effet, au cours du déroulement de la trajectoire 23, on peut modifier le positionnement angulaire d'un axe du simulateur de mouvement 3. Par exemple, on peut piloter l'axe de lacet A3 du simulateur de mouvement 3 de manière indépendante du lacet du mobile 21.

Avantageusement, au moins une partie des commandes cinématiques masquées C3 peuvent dépendre d'une loi interne au modèle de masquage M3. En particulier, la loi interne est indépendante des commandes cinématiques d'entrées C1. Ainsi, on peut injecter dans le simulateur de mouvement 3, une commande de mouvement à partir du modèle de masquage M4, indépendante des commandes cinématiques d'entrées C1 depuis le modèle de simulation M2. Ceci permet de dérouler une trajectoire où le mobile peut réaliser plusieurs boucles avec un simulateur de mouvement 3 présentant un débattement angulaire limité.

Par ailleurs, la trajectoire peut présenter une dynamique supérieure à celle autorisée par le simulateur de mouvement 3.

A titre d'exemple, dans le cas où, pour un événement transitoire, les commandes cinématiques d'entrées C1 comportent une commande de vitesse supérieure à ce qu'est capable de générer le simulateur de mouvement 3, les caractéristiques des données cinématiques D1 réellement exécutées par le simulateur de mouvement 3 sont minorées par rapport aux commandes cinématiques d'entrées C1. Ainsi, ce mouvement altéré est pris en compte par les données inertielles de mesure R et les données inertielles théoriques T1. Toutefois, en vertu par exemple, de la formule I=T2-T1+R, les données inertielles I ne sont pas affectées par l'altération du mouvement. Ainsi, la trajectoire n'est pas affectée par le sous-dimensionnement du simulateur de mouvement 3.

L'invention vise aussi un programme d'ordinateur téléchargeable depuis un réseau de communication comprenant des instructions de codes de programme pour l'exécution des étapes du procédé de contrôle selon l'invention lorsqu'il est exécuté sur l'ordinateur 5. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

## Revendications

1. Procédé de contrôle fonctionnel d'une centrale inertielle (7) d'un mobile embarquée sur un simulateur de mouvement (3) et fournissant en temps réel, des données inertielles de mesure (R) représentatives d'un mouvement appliqué par ledit simulateur de mouvement (3), **caractérisé en ce qu'**il comporte:
- une modélisation théorique (M1) de la centrale inertielle (7) embarquée sur le simulateur de mouvement (3), ladite modélisation théorique étant alimentée en temps réel par des données cinématiques (D1) réellement exécutées par le simulateur de mouvement (3) et fournissant en temps réel des données inertielles théoriques (T1) représentatives desdites données inertielles de mesure (R) censées être mesurées par la centrale inertielle (7) embarquée sur le simulateur de mouvement (3),
- une modélisation de simulation (M2) comprenant une modélisation de la centrale inertielle dans un environnement réel de navigation, la modélisation de simulation étant alimentée en temps réel par des commandes de pilotage (D2) et fournissant, en temps réel des données inertielles de simulation (T2) représentatives des données de sorties de la centrale inertielle dans ledit environnement réel de navigation, ladite modélisation de simulation prenant en compte lesdites commandes de pilotage (D2) pour dérouler une trajectoire du mobile mettant en oeuvre la centrale inertielle,
- calcul desdites commandes de pilotage (D2) en fonction des données inertielles de mesure (R), des données inertielles de simulation (T2) et des données inertielles théoriques (T1), et
- validation de la centrale inertielle (7), en comparant la trajectoire du mobile obtenue en mettant en oeuvre la centrale inertielle, avec une trajectoire de référence prédéterminée.

2. Procédé selon la revendication 1, **caractérisée en ce que** les données inertielles de mesure (R) comportent des informations accélérométriques issues des accéléromètres de ladite centrale inertielle, et **en ce que** les données inertielles théoriques (T1) comportent des informations accélérométriques théoriques.

3. Procédé selon la revendication 2, **caractérisée en ce que** les données inertielles de mesure (R) comportent en outre des informations gyromètriques issues des gyromètres de ladite centrale inertielle, **en ce que** les données inertielles théoriques (T1) comportent des informations gyromètriques théoriques, et **en ce que** les données inertielles de simulation (T2) comportent des informations gyromètriques de simulation et des informations accélérométriques de simulation.

4. Procédé selon l'une quelconque des revendications 1 à 3, **caractérisée en ce que** lesdites commandes de pilotage (D2) sont calculées en fonction des données inertielles (I) définies par une somme entre les données inertielles de mesure (R) et les données inertielles de simulation (T2) diminuée des données inertielles théoriques (T1).

5. procédé selon la revendication 4, **caractérisée en ce que** la centrale inertielle (7) est considérée valide lorsqu'un différentiel entre les données inertielles (I) et les données inertielles de simulation (T2) est borné par une valeur de seuil prédéterminée.

6. Procédé selon l'une quelconque des revendications 1 à 5, **caractérisée en ce qu'**il comporte en outre une modélisation d'avance de phase (M3) alimentée en temps réel par des commandes cinématiques d'entrées (C1) depuis la modélisation de simulation (M2) et fournissant des commandes cinématiques de sortie (C2) au simulateur de mouvement (3) pour compenser un retard d'exécution inhérent audit simulateur de mouvement.

7. Procédé selon la revendication 6, **caractérisée en ce que** lesdites commandes cinématiques d'entrées (C1) présentent un profil synchrone avec celui des données cinématiques (D1) et **en ce que** les amplitudes desdites données cinématiques (D1) et desdites commandes cinématiques d'entrées (C1) sont cohérentes.

8. Procédé selon la revendication 7, **caractérisée en ce qu'**il comporte en outre une modélisation de masquage (M4) en aval de la modélisation de simulation (M2) et en amont de la modélisation d'avance de phase (M3) de sorte que la modélisation de masquage est alimentée en temps réel par les commandes cinématiques d'entrées (C1) et fournissant des commandes cinématiques masquées (C3) à la modélisation d'avance de phase (M3) pour masquer au moins une partie des phases du mouvement.

9. Procédé selon la revendication 8, **caractérisée en ce que** au moins une partie des commandes cinématiques masquées (C3) dépende d'une loi interne à la modélisation de masquage (M4) et qui est indépendante des commandes cinématiques d'entrées (C1).

10. Système de contrôle fonctionnel d'une centrale inertielle (7) d'un mobile embarquée sur un simulateur de mouvement (3) et fournissant en temps réel, des données inertielles de mesure (R) représentatives d'un mouvement appliqué par ledit simulateur de mouvement, **caractérisé en ce qu'**il comporte:
- un modèle théorique (M1) comprenant une modélisation de la centrale inertielle (7) embarquée sur le simulateur de mouvement (3), le modèle théorique étant alimenté en temps réel par des données cinématiques (D1) réellement exécutées par le simulateur de mouvement et fournissant en temps réel des données inertielles théoriques (T1) représentatives desdites données inertielles de mesure (R) censées être mesurées par la centrale inertielle embarquée sur le simulateur de mouvement,
- un modèle de simulation (M2) comprenant une modélisation de la centrale inertielle dans un environnement réel de navigation, le modèle de simulation étant alimenté en temps réel par des commandes de pilotage (D2) et fournissant, en temps réel des données inertielles de simulation (T2) représentatives des données de sorties de la centrale inertielle dans ledit environnement réel de navigation, ledit modèle de simulation (M2) prenant en compte lesdites commandes de pilotage (D2) pour dérouler une trajectoire du mobile mettant en oeuvre la centrale inertielle,
- des moyens de calcul (11) pour calculer lesdites commandes de pilotage (D2) en fonction des données inertielles de mesure (R), des données inertielles de simulation (T2) et des données inertielles théoriques (T1), et
- des moyens de validation (13) pour s'assurer de la validité de la centrale inertielle, en comparant la trajectoire du mobile obtenue en mettant en oeuvre la centrale inertielle, avec une trajectoire de référence prédéterminée.

11. Système selon l'une quelconque des revendications 9, **caractérisée en ce que** les moyens de calcul (11) sont destinés à déterminer lesdites commandes de pilotage (D2) en fonction des données inertielles (I) définies par une somme entre les données inertielles de mesure (R) et les données inertielles de simulation (T2) diminuée des données inertielles théoriques (T1).

12. Système selon la revendication 10, **caractérisée en ce que** les moyens de validation (13) sont destinés à considérer la centrale inertielle comme étant valide lorsqu'un différentiel entre les données inertielles (I) et les données inertielles de simulation (T2) est borné par une valeur de seuil prédéterminée.

13. Système selon l'une quelconque des revendications 10 à 12, **caractérisée en ce qu'**il comporte en outre un modèle d'avance de phase (M3) alimenté en temps réel par des commandes cinématiques d'entrées (C1) depuis le modèle de simulation (M2) et fournissant des commandes cinématiques de sortie (C2) au simulateur de mouvement pour compenser un retard d'exécution inhérent audit simulateur de mouvement.

14. Système selon la revendication 13, **caractérisée en ce qu'**il comporte en outre un modèle de masquage (M4) interposé entre ledit modèle de simulation (M2) et ledit modèle d'avance de phase (M3) de sorte que le modèle de masquage est alimenté en temps réel par les commandes cinématiques d'entrées (C1) et fournissant des commandes cinématiques masquées (C3) au modèle d'avance de phase (M3) pour masquer au moins une partie des phases du mouvement.

15. Programme d'ordinateur, **caractérisé en ce qu'**il comprend des instructions de codes pour l'exécution des étapes du procédé de contrôle selon au moins l'une des revendications 1 à 9, lorsqu'il est exécuté sur un ordinateur.

## Claims

1. A method of verifying the functioning of an inertial unit (7) for a moving body, the unit being mounted on a movement simulator (3) and supplying in real time measurement inertial data (R) representing a movement applied by said movement simulator (3), **characterized in that** it comprises:
theoretical modeling (M1) of the inertial unit (7) onboard the movement simulator (3), said theoretical modeling being fed in real time with kinematic data (D1) actually executed by the movement simulator (3) and supplying in real time theoretical inertial data (T1) representing said measurement inertial data (R) deemed to be measured by the inertial unit (7) on the movement simulator (3);
simulation modeling (M2) comprising modeling of the inertial unit in a real navigation environment, the simulation modeling being fed in real time with control commands (D2) and supplying in real time simulation inertial data (T2) representing output data from the inertial unit in said real navigation environment, said simulation modeling taking account of said control commands (D2) to compute a path of the moving body using the inertial unit;
calculating said control commands (D2) as a function of the measurement inertial data (R), the simulation inertial data (T2), and the theoretical inertial data (T1); and
validating the inertial unit (7) by comparing the path of the moving body obtained using the inertial unit with a predetermined reference path.

2. A method according to claim 1, **characterized in that** the measurement inertial data (R) includes accelerometer information from accelerometers of said inertial unit, and the theoretical inertial data (T1) includes theoretical accelerometer information.

3. A method according to claim 2, **characterized in that** the measurement inertial data (R) further includes gyro information from gyros of said inertial unit, the theoretical inertial data (T1) includes theoretical gyro information, and the simulation inertial data (T2) includes simulation gyro information and simulation accelerometer information.

4. A method according to any one of claims 1 to 3, **characterized in that** said control commands (D2) are calculated as a function of the inertial data (I) defined by the sum of the measurement inertial data (R) plus the simulation inertial data (T2) minus the theoretical inertial data (T1).

5. A method according to claim 4, **characterized in that** the inertial unit (7) is considered valid when the difference between the inertial data (I) and the simulation inertial data (T2) is bounded by a predetermined threshold value.

6. A method according to any one of claims 1 to 5, **characterized in that** it further includes phase advance modeling (M3) fed in real time with input kinematic commands (C1) from the simulation modeling (M2) and supplying output kinematic commands (C2) to the movement simulator (3) for compensating an execution delay inherent to said movement simulator.

7. A method according to claim 6, **characterized in that** said input kinematic commands (C1) have a profile synchronous with that of the kinematic data (D1) and the amplitudes of said kinematic data (D1) and said input kinematic commands (C1) are consistent.

8. A method according to claim 7, **characterized in that** it further includes masking modeling (M4) downstream from the simulation modeling (M2) and upstream from the phase advance modeling (M3), so that the masking modeling is fed in real time with the input kinematic commands (C1), the masking modeling (M4) supplying masked kinematic commands (C3) to the phase advance modeling (M3) to mask at least some of the phases of the movement.

9. A method according to claim 8, **characterized in that** at least some of the masked kinematic commands (C3) depend on a law internal to the masking modeling (M4) that is independent of the input kinematic commands (C1).

10. A system for verifying the functioning of an inertial unit (7) for a moving body, the unit being mounted on a movement simulator (3) and supplying in real time measurement inertial data (R) representing a movement applied by said movement simulator, **characterized in that** it comprises:
a theoretical model (M1) comprising modeling of the inertial unit (7) onboard the movement simulator (3), the theoretical model being fed in real time with kinematic data (D1) actually executed by the movement simulator and supplying in real time theoretical inertial data (T1) representing said measurement inertial data (R) deemed to be measured by the inertial unit on the movement simulator;
a simulation model (M2) comprising modeling of the inertial unit in a real navigation environment, the simulation model being fed in real time with control commands (D2) and supplying in real time simulation inertial data (T2) representing output data from the inertial unit in said real navigation environment, said simulation model (M2) taking account of said control commands (D2) to compute a path of the moving body using the inertial unit;
calculation means (11) for calculating said control commands (D2) as a function of the measurement inertial data (R), the simulation inertial data (T2), and the theoretical inertial data (T1); and
validation means (13) for validating the inertial unit by comparing the path of the moving body obtained using the inertial unit with a predetermined reference path.

11. A system according to claim 10 **characterized in that** the calculation means (11) are adapted to determine said control commands (D2) as a function of the inertial data (I) defined by the sum of the measurement inertial data (R) plus the simulation inertial data (T2) minus the theoretical inertial data (T1).

12. A system according to claim 10, **characterized in that** the validation means (13) are adapted to consider the inertial unit valid when the difference between the inertial data (I) and the simulation inertial data (T2) is bounded by a predetermined threshold value.

13. A system according to any one of claims 10 to 12, **characterized in that** it further comprises a phase advance model (M3) fed in real time with input kinematic commands (C1) from the simulation model (M2) and supplying output kinematic commands (C2) to the movement simulator for compensating an execution delay inherent to said movement simulator

14. A system according to claim 13, **characterized in that** it further comprises a masking model (M4) between said simulation model (M2) and said phase advance model (M3), so that the mask modeling is fed in real time with the input kinematic commands (C1), the masking model (M4) supplying masked kinematic commands (C3) to the phase advance model (M3) to mask at least some of the phases of the movement.

15. A computer program, **characterized in that** it comprises code instructions for executing steps of the control method according to at least one of claims 1 to 9 when it is executed on a computer.

## Patentansprüche

1. Verfahren zur Funktionskontrolle eines Trägheitsnavigationssystems (7) eines Fahrzeugs, das in einen Bewegungssimulator (3) eingebaut ist und in Echtzeit inertiale Meßdaten (R) liefert, die für eine durch den Bewegungssimulator (3) angelegte Bewegung repräsentativ sind, **dadurch gekennzeichnet, daß** es folgendes umfaßt:
- eine theoretische Modellierung (M1) des in den Bewegungssimulator (3) eingebauten Trägheitsnavigationssystems (7), wobei die theoretische Modellierung in Echtzeit mit tatsächlich durch den Bewegungssimulator (3) erstellten kinematischen Daten (D1) gespeist wird und in Echtzeit theoretische Inertialdaten (T1) liefert, die für die inertialen Meßdaten (R) repräsentativ sind, welche als durch das in den Bewegungssimulator (3) eingebaute Trägheitsnavigationssystem (7) gemessen betrachtet werden,
- eine Simulationsmodellierung (M2), die eine Modellierung des Trägheitsnavigationssystems in einer realen Navigationsumgebung umfaßt, wobei die Simulationsmodellierung in Echtzeit mit Steuerbefehlen (D2) gespeist wird und in Echtzeit inertiale Simulationsdaten (T2) liefert, die für die Ausgangsdaten des Trägheitsnavigationssystems in der realen Navigationsumgebung repräsentativ sind, wobei die Simulationsmodellierung die Steuerbefehle (D2) berücksichtigt, um einen Weg des das Trägheitsnavigationssystem verwendenden Fahrzeugs ablaufen zu lassen,
- Berechnung der Steuerbefehle (D2) in Abhängigkeit der inertialen Meßdaten (R), der inertialen Simulationsdaten (T2) und der theoretischen Inertialdaten (T1), und
- Validierung des Trägheitsnavigationssystems (7) durch Vergleichen des unter Verwendung des Trägheitsnavigationssystems erhaltenen Weges des Fahrzeugs mit einem vorbestimmten Referenzweg.

2. Verfahren nach Anspruch 1, **dadurch gekennzeichnet, daß** die inertialen Meßdaten (R) Beschleunigungsmeßinformationen aus den Beschleunigungsmessern des Trägheitsnavigationssystems umfassen und daß die theoretischen Inertialdaten (T1) theoretische Beschleunigungsmeßinformationen umfassen.

3. Verfahren nach Anspruch 2, **dadurch gekennzeichnet, daß** die inertialen Meßdaten (R) ferner Richtungsänderungsinformationen aus den Gyrometern des Trägheitsnavigationssystems umfassen, daß die theoretischen Inertialdaten (T1) theoretische Richtungsänderungsinformationen umfassen und daß die inertialen Simulationsdaten (T2) Simulationsrichtungsänderungsinformationen sowie Simulationsbeschleunigungsmeßinformationen umfassen.

4. Verfahren nach einem der Ansprüche 1 bis 3, **dadurch gekennzeichnet, daß** die Steuerbefehle (D2) in Abhängigkeit der Inertialdaten (I) errechnet werden, die durch eine Summe aus den inertialen Meßdaten (R) und den inertialen Simulationsdaten (T2), verringert um die theoretischen Inertialdaten (T1) definiert sind.

5. Verfahren nach Anspruch 4, **dadurch gekennzeichnet, daß** das Trägheitsnavigationssystem (7) dann als gültig betrachtet wird, wenn eine Differenz aus den Inertialdaten (I) und den inertialen Simulationsdaten (T2) durch einen vorbestimmten Schwellenwert begrenzt ist.

6. Verfahren nach einem der Ansprüche 1 bis 5, **dadurch gekennzeichnet, daß** es ferner eine Phasenvoreilungs-Modellierung (M3) umfaßt, die in Echtzeit mit kinematischen Eingangsbefehlen (C1) aus der Simulationsmodellierung (M2) gespeist wird und dem Bewegungssimulator (3) kinematische Ausgangsbefehle (C2) liefert, um eine dem Bewegungssimulator anhaftende Ausführungsverzögerung zu kompensieren.

7. Verfahren nach Anspruch 6, **dadurch gekennzeichnet, daß** die kinematischen Eingangsbefehle (C1) ein Profil aufweisen, das mit dem der kinematischen Daten (D1) synchron ist, und daß die Bereiche der kinematischen Daten (D1) und der kinematischen Eingangsbefehle (C1) kohärent sind.

8. Verfahren nach Anspruch 7, **dadurch gekennzeichnet, daß** es ferner nach der Simulationsmodellierung (M2) und vor der Phasenvoreilungs-Modellierung (M3) eine Ausblendungs-Modellierung (M4) umfaßt, so daß die Ausblendungs-Modellierung in Echtzeit mit den kinematischen Eingangsbefehlen (C1) gespeist wird und der Phasenvoreilungs-Modellierung (M3) ausgeblendete kinematische Befehle (C3) liefert, um wenigstens einen Teil der Phasen der Bewegung auszublenden.

9. Verfahren nach Anspruch 8, **dadurch gekennzeichnet, daß** wenigstens ein Teil der ausgeblendeten kinematischen Befehle (C3) von einem Gesetz innerhalb der Ausblendungs-Modellierung (M4) abhängt, das von den kinematischen Eingangsbefehlen (C1) unabhängig ist.

10. System zur Funktionskontrolle eines Trägheitsnavigationssystems (7) eines Fahrzeugs, das in einen Bewegungssimulator (3) eingebaut ist und in Echtzeit inertiale Meßdaten (R) liefert, die für eine durch den Bewegungssimulator angelegte Bewegung repräsentativ sind, **dadurch gekennzeichnet, daß** es folgendes umfaßt:
- ein theoretisches Modell (M1), das eine Modellierung des in den Bewegungssimulator (3) eingebauten Trägheitsnavigationssystems (7) umfaßt, wobei das theoretische Modell in Echtzeit mit tatsächlich durch den Bewegungssimulator erstellten kinematischen Daten (D1) gespeist wird und in Echtzeit theoretische Inertialdaten (T1) liefert, die für die inertialen Meßdaten (R) repräsentativ sind, welche als durch das in den Bewegungssimulator eingebaute Trägheitsnavigationssystem gemessen betrachtet werden,
- ein Simulationsmodell (M2), das eine Modellierung des Trägheitsnavigationssystems in einer realen Navigationsumgebung umfaßt, wobei das Simulationsmodell in Echtzeit mit Steuerbefehlen (D2) gespeist wird und in Echtzeit inertiale Simulationsdaten (T2) liefert, die für die Ausgangsdaten des Trägheitsnavigationssystems in der realen Navigationsumgebung repräsentativ sind, wobei das Simulationsmodell (M2) die Steuerbefehle (D2) berücksichtigt, um einen Weg des das Trägheitsnavigationssystem verwendenden Fahrzeugs ablaufen zu lassen,
- Berechnungsmittel (11) zur Berechnung der Steuerbefehle (D2) in Abhängigkeit der inertialen Meßdaten (R), der inertialen Simulationsdaten (T2) und der theoretischen Inertialdaten (T1), und
- Validierungsmittel (13), um sich durch Vergleichen des unter Verwendung des Trägheitsnavigationssystems erhaltenen Weges des Fahrzeugs mit einem vorbestimmten Referenzweg der Gültigkeit des Trägheitsnavigationssystems zu vergewissern.

11. System nach Anspruch 10, **dadurch gekennzeichnet, daß** die Berechnungsmittel (11) dazu bestimmt sind, die Steuerbefehle (D2) in Abhängigkeit der Inertialdaten (I) zu bestimmen, welche durch eine Summe aus den inertialen Meßdaten (R) und den inertialen Simulationsdaten (T2), verringert um die theoretischen Inertialdaten (T1) definiert sind.

12. System nach Anspruch 10, **dadurch gekennzeichnet, daß** die Validierungsmittel (13) dazu bestimmt sind, das Trägheitsnavigationssystem dann als gültig zu betrachten, wenn eine Differenz aus den Inertialdaten (I) und den inertialen Simulationsdaten (T2) durch einen vorbestimmten Schwellenwert begrenzt ist.

13. System nach einem der Ansprüche 10 bis 12, **dadurch gekennzeichnet, daß** es ferner eine Phasenvoreilungs-Modell (M3) umfaßt, das in Echtzeit mit kinematischen Eingangsbefehlen (C1) aus dem Simulationsmodell (M2) gespeist wird und dem Bewegungssimulator kinematische Ausgangsbefehle (C2) liefert, um eine dem Bewegungssimulator anhaftende Ausführungsverzögerung zu kompensieren.

14. System nach Anspruch 13, **dadurch gekennzeichnet, daß** es ferner ein Ausblendungs-Modell (M4) umfaßt, das dem Simulationsmodell (M2) und dem Phasenvoreilungs-Modell (M3) zwischengeschaltet ist, so daß das Ausblendungs-Modell in Echtzeit mit den kinematischen Eingangsbefehlen (C1) gespeist wird und dem Phasenvoreilungs-Modell (M3) ausgeblendete kinematische Befehle (C3) liefert, um wenigstens einen Teil der Phasen der Bewegung auszublenden.

15. Computerprogramm, **dadurch gekennzeichnet, daß** es Code-Befehle für die Durchführung der Schritte des Kontrollverfahrens nach wenigstens einem der Ansprüche 1 bis 9, wenn es auf einem Computer ausgeführt wird, umfaßt.
